# EUROPEAN PATENT SPECIFICATION

(11) **EP 4 316 080 B1**
(45) Date of publication and mention of the grant of the patent: **10.12.2025**
(21) Application number: 21933535.3
(22) Date of filing: 29.03.2021
(51) Int. Cl.: H04L 5/00, H04W 52/54, H04W 52/42, H04W 52/24, H04W 52/14, H04W 52/08, H04W 52/10

(54) **POWER CONTROL INDICATION USING SOUNDING REFERENCE SIGNAL RESOURCE INDICATORS**
LEISTUNGSSTEUERUNGSANZEIGE MIT KLANGREFERENZSIGNALRESSOURCENINDIKATOREN
INDICATION DE COMMANDE DE PUISSANCE À L'AIDE D'INDICATEURS DE RESSOURCES DE SIGNAL DE RÉFÉRENCE DE SONDAGE

(43) Date of publication of application: 07.02.2024
(73) Proprietor: QUALCOMM INCORPORATED, San Diego, California 92121-1714 (US)
(72) Inventor: YUAN, Fang, San Diego, California 92121-1714 (US); NAM, Wooseok, San Diego, California 92121-1714 (US); ZHOU, Yan, San Diego, California 92121-1714 (US); LUO, Tao, San Diego, California 92121-1714 (US)
(74) Representative: Tomkins & Co
(86) International application number: PCT/CN2021/083504
(87) International publication number: WO 2022/204848

(56) References cited:
- EP-A1- 3 731 448
- EP-A1- 3 771 258
- WO-A1-2020/092936
- WO-A1-2020/093362
- CN-A- 110 536 394
- CN-A- 110 710 281
- CN-A- 110 831 142
- CN-A- 110 945 822
- CN-A- 111 901 021
- CN-A- 112 166 563
- US-A1- 2019 319 823

## Description

### FIELD OF THE DISCLOSURE

Aspects of the present disclosure generally relate to wireless communication and to techniques and apparatuses for power control indication using sounding reference signal resource indicators.

### BACKGROUND

Wireless communication systems are widely deployed to provide various telecommunication services such as telephony, video, data, messaging, and broadcasts. Typical wireless communication systems may employ multiple-access technologies capable of supporting communication with multiple users by sharing available system resources (e.g., bandwidth, transmit power, or the like). Examples of such multiple-access technologies include code division multiple access (CDMA) systems, time division multiple access (TDMA) systems, frequency-division multiple access (FDMA) systems, orthogonal frequency-division multiple access (OFDMA) systems, single-carrier frequency-division multiple access (SC-FDMA) systems, time division synchronous code division multiple access (TD-SCDMA) systems, and Long Term Evolution (LTE). LTE/LTE-Advanced is a set of enhancements to the Universal Mobile Telecommunications System (UMTS) mobile standard promulgated by the Third Generation Partnership Project (3GPP).

A wireless network may include a number of base stations (BSs) that can support communication for a number of user equipment (UEs). A UE may communicate with a BS via the downlink and uplink. The downlink (or forward link) refers to the communication link from the BS to the UE, and the uplink (or reverse link) refers to the communication link from the UE to the BS. As will be described in more detail herein, a BS may be referred to as a Node B, a gNB, an access point (AP), a radio head, a transmit receive point (TRP), a New Radio (NR) BS, a 5G Node B, or the like.

The above multiple access technologies have been adopted in various telecommunication standards to provide a common protocol that enables different user equipment to communicate on a municipal, national, regional, and even global level. NR, which may also be referred to as 5G, is a set of enhancements to the LTE mobile standard promulgated by the 3GPP. NR is designed to better support mobile broadband Internet access by improving spectral efficiency, lowering costs, improving services, making use of new spectrum, and better integrating with other open standards using orthogonal frequency division multiplexing (OFDM) with a cyclic prefix (CP) (CP-OFDM) on the downlink (DL), using CP-OFDM and/or SC-FDM (e.g., also known as discrete Fourier transform spread OFDM (DFT-s-OFDM)) on the uplink (UL), as well as supporting beamforming, multiple-input multiple-output (MIMO) antenna technology, and carrier aggregation. As the demand for mobile broadband access continues to increase, further improvements in LTE, NR, and other radio access technologies remain useful. US 2019/319823 A1 relates generally to wireless communication, and more specifically to uplink multi-beam operation.

### BRIEF DESCRIPTION OF THE DRAWINGS

So that the above-recited features of the present disclosure can be understood in detail, a more particular description, briefly summarized above, may be had by reference to aspects, some of which are illustrated in the appended drawings. It is to be noted, however, that the appended drawings illustrate only certain typical aspects of this disclosure and are therefore not to be considered limiting of its scope, for the description may admit to other equally effective aspects. The same reference numbers in different drawings may identify the same or similar elements.
Fig. 1 is a diagram illustrating an example of a wireless network, in accordance with the present disclosure.
Fig. 2 is a diagram illustrating an example of a base station in communication with a user equipment (UE) in a wireless network, in accordance with the present disclosure.
Fig. 3 is a diagram illustrating an example of a logical architecture of a distributed radio access network (RAN), in accordance with the present disclosure.
Fig. 4 is a diagram illustrating an example of multi-transmit receive point (TRP) (multi-TRP) communication, in accordance with the present disclosure.
Fig. 5 is a diagram illustrating an example of physical channels and reference signals in a wireless network, in accordance with the present disclosure.
Fig. 6 is a diagram illustrating an example of a medium access control (MAC) control element for conveying a sounding reference signal (SRS) resource indication (SRI), in accordance with the present disclosure.
Fig. 7 is a diagram illustrating an example associated with power control indication using SRIs, in accordance with the present disclosure.
Fig. 8 is a diagram illustrating an example process associated with power control indication using SRIs, in accordance with the present disclosure.
Fig. 9 is a block diagram of an example apparatus for wireless communication, in accordance with the present disclosure.

### SUMMARY

In some aspects, a method of wireless communication performed by a user equipment (UE) according to claim 8 is disclosed.

A UE for wireless communication according to claim 1 is disclosed.

A non-transitory computer readable medium is disclosed according to claim 9. Further embodiments are defined in the dependent claims.

Aspects generally include a method, apparatus, system, computer program product, non-transitory computer-readable medium, user equipment, base station, wireless communication device, and/or processing system as substantially described herein with reference to and as illustrated by the drawings and specification.

The foregoing has outlined rather broadly the features and technical advantages of examples according to the disclosure in order that the detailed description that follows may be better understood. Additional features and advantages will be described hereinafter. The conception and specific examples disclosed may be readily utilized as a basis for modifying or designing other structures for carrying out the same purposes of the present disclosure. Characteristics of the concepts disclosed herein, both their organization and method of operation, together with associated advantages will be better understood from the following description when considered in connection with the accompanying figures. Each of the figures is provided for the purposes of illustration and description, and not as a definition of the limits of the claims.

While aspects are described in the present disclosure by illustration to some examples, those skilled in the art will understand that such aspects may be implemented in many different arrangements and scenarios. Techniques described herein may be implemented using different platform types, devices, systems, shapes, sizes, and/or packaging arrangements. For example, some aspects may be implemented via integrated chip embodiments or other non-module-component based devices (e.g., end-user devices, vehicles, communication devices, computing devices, industrial equipment, retail/purchasing devices, medical devices, or artificial intelligence-enabled devices). Aspects may be implemented in chip-level components, modular components, non-modular components, non-chip-level components, device-level components, or system-level components. Devices incorporating described aspects and features may include additional components and features for implementation and practice of claimed and described aspects. For example, transmission and reception of wireless signals may include a number of components for analog and digital purposes (e.g., hardware components including antenna, RF chains, power amplifiers, modulators, buffer, processor(s), interleaver, adders, or summers). It is intended that aspects described herein may be practiced in a wide variety of devices, components, systems, distributed arrangements, or end-user devices of varying size, shape, and constitution.

### DETAILED DESCRIPTION

Various aspects of the disclosure are described more fully hereinafter with reference to the accompanying drawings. This disclosure may, however, be embodied in many different forms and should not be construed as limited to any specific structure or function presented throughout this disclosure. Rather, these aspects are provided so that this disclosure will be thorough and complete, and will fully convey the scope of the disclosure to those skilled in the art. Based on the teachings herein, one skilled in the art should appreciate that the scope of the disclosure is intended to cover any aspect of the disclosure disclosed herein, whether implemented independently of or combined with any other aspect of the disclosure. For example, an apparatus may be implemented or a method may be practiced using any number of the aspects set forth herein. In addition, the scope of the disclosure is intended to cover such an apparatus or method which is practiced using other structure, functionality, or structure and functionality in addition to or other than the various aspects of the disclosure set forth herein. It should be understood that any aspect of the disclosure disclosed herein may be embodied by one or more elements of a claim.

Several aspects of telecommunication systems will now be presented with reference to various apparatuses and techniques. These apparatuses and techniques will be described in the following detailed description and illustrated in the accompanying drawings by various blocks, modules, components, circuits, steps, processes, algorithms, or the like (collectively referred to as "elements"). These elements may be implemented using hardware, software, or combinations thereof. Whether such elements are implemented as hardware or software depends upon the particular application and design constraints imposed on the overall system.

It should be noted that while aspects may be described herein using terminology commonly associated with a 5G or NR radio access technology (RAT), aspects of the present disclosure can be applied to other RATs, such as a 3G RAT, a 4G RAT, and/or a RAT subsequent to 5G (e.g., 6G).

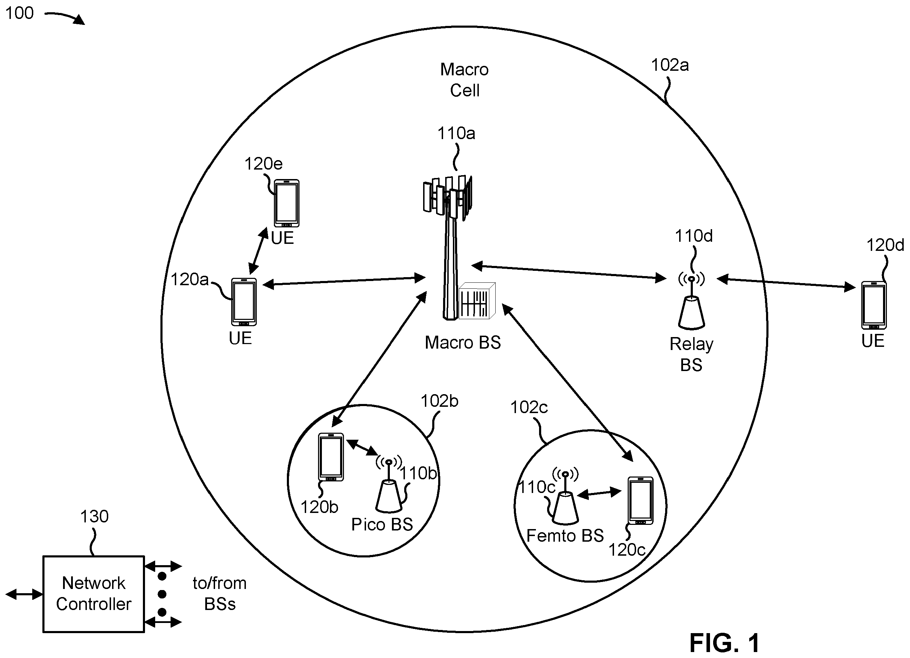

Fig. 1 is a diagram illustrating an example of a wireless network 100, in accordance with the present disclosure. The wireless network 100 may be or may include elements of a 5G (NR) network and/or an LTE network, among other examples. The wireless network 100 may include a number of base stations 110 (shown as BS 110a, BS 110b, BS 110c, and BS 110d) and other network entities. A base station (BS) is an entity that communicates with user equipment (UEs) and may also be referred to as an NR BS, a Node B, a gNB, a 5G node B (NB), an access point, a transmit receive point (TRP), or the like. Each BS may provide communication coverage for a particular geographic area. In 3GPP, the term "cell" can refer to a coverage area of a BS and/or a BS subsystem serving this coverage area, depending on the context in which the term is used.

A BS may provide communication coverage for a macro cell, a pico cell, a femto cell, and/or another type of cell. A macro cell may cover a relatively large geographic area (e.g., several kilometers in radius) and may allow unrestricted access by UEs with service subscription. A pico cell may cover a relatively small geographic area and may allow unrestricted access by UEs with service subscription. A femto cell may cover a relatively small geographic area (e.g., a home) and may allow restricted access by UEs having association with the femto cell (e.g., UEs in a closed subscriber group (CSG)). A BS for a macro cell may be referred to as a macro BS. A BS for a pico cell may be referred to as a pico BS. A BS for a femto cell may be referred to as a femto BS or a home BS. In the example shown in Fig. 1, a BS 110a may be a macro BS for a macro cell 102a, a BS 110b may be a pico BS for a pico cell 102b, and a BS 110c may be a femto BS for a femto cell 102c. A BS may support one or multiple (e.g., three) cells. The terms "eNB", "base station", "NR BS", "gNB", "TRP", "AP", "node B", "5G NB", and "cell" may be used interchangeably herein.

In some aspects, a cell may not necessarily be stationary, and the geographic area of the cell may move according to the location of a mobile BS. In some aspects, the BSs may be interconnected to one another and/or to one or more other BSs or network nodes (not shown) in the wireless network 100 through various types of backhaul interfaces, such as a direct physical connection or a virtual network, using any suitable transport network.

Wireless network 100 may also include relay stations. A relay station is an entity that can receive a transmission of data from an upstream station (e.g., a BS or a UE) and send a transmission of the data to a downstream station (e.g., a UE or a BS). A relay station may also be a UE that can relay transmissions for other UEs. In the example shown in Fig. 1, a relay BS 110d may communicate with macro BS 110a and a UE 120d in order to facilitate communication between BS 110a and UE 120d. A relay BS may also be referred to as a relay station, a relay base station, a relay, or the like.

Wireless network 100 may be a heterogeneous network that includes BSs of different types, such as macro BSs, pico BSs, femto BSs, relay BSs, or the like. These different types of BSs may have different transmit power levels, different coverage areas, and different impacts on interference in wireless network 100. For example, macro BSs may have a high transmit power level (e.g., 5 to 40 watts) whereas pico BSs, femto BSs, and relay BSs may have lower transmit power levels (e.g., 0.1 to 2 watts).

A network controller 130 may couple to a set of BSs and may provide coordination and control for these BSs. Network controller 130 may communicate with the BSs via a backhaul. The BSs may also communicate with one another, e.g., directly or indirectly via a wireless or wireline backhaul.

UEs 120 (e.g., 120a, 120b, 120c) may be dispersed throughout wireless network 100, and each UE may be stationary or mobile. A UE may also be referred to as an access terminal, a terminal, a mobile station, a subscriber unit, a station, or the like. A UE may be a cellular phone (e.g., a smart phone), a personal digital assistant (PDA), a wireless modem, a wireless communication device, a handheld device, a laptop computer, a cordless phone, a wireless local loop (WLL) station, a tablet, a camera, a gaming device, a netbook, a smartbook, an ultrabook, a medical device or equipment, biometric sensors/devices, wearable devices (smart watches, smart clothing, smart glasses, smart wrist bands, smart jewelry (e.g., smart ring, smart bracelet)), an entertainment device (e.g., a music or video device, or a satellite radio), a vehicular component or sensor, smart meters/sensors, industrial manufacturing equipment, a global positioning system device, or any other suitable device that is configured to communicate via a wireless or wired medium.

Some UEs may be considered machine-type communication (MTC) or evolved or enhanced machine-type communication (eMTC) UEs. MTC and eMTC UEs include, for example, robots, drones, remote devices, sensors, meters, monitors, and/or location tags, that may communicate with a base station, another device (e.g., remote device), or some other entity. A wireless node may provide, for example, connectivity for or to a network (e.g., a wide area network such as Internet or a cellular network) via a wired or wireless communication link. Some UEs may be considered Internet-of-Things (IoT) devices, and/or may be implemented as NB-IoT (narrowband internet of things) devices. Some UEs may be considered a Customer Premises Equipment. UE 120 may be included inside a housing that houses components of UE 120, such as processor components and/or memory components. In some aspects, the processor components and the memory components may be coupled together. For example, the processor components (e.g., one or more processors) and the memory components (e.g., a memory) may be operatively coupled, communicatively coupled, electronically coupled, and/or electrically coupled.

In general, any number of wireless networks may be deployed in a given geographic area. Each wireless network may support a particular RAT and may operate on one or more frequencies. A RAT may also be referred to as a radio technology, an air interface, or the like. A frequency may also be referred to as a carrier, a frequency channel, or the like. Each frequency may support a single RAT in a given geographic area in order to avoid interference between wireless networks of different RATs. In some cases, NR or 5G RAT networks may be deployed.

In some aspects, two or more UEs 120 (e.g., shown as UE 120a and UE 120e) may communicate directly using one or more sidelink channels (e.g., without using a base station 110 as an intermediary to communicate with one another). For example, the UEs 120 may communicate using peer-to-peer (P2P) communications, device-to-device (D2D) communications, a vehicle-to-everything (V2X) protocol (e.g., which may include a vehicle-to-vehicle (V2V) protocol or a vehicle-to-infrastructure (V2I) protocol), and/or a mesh network. In this case, the UE 120 may perform scheduling operations, resource selection operations, and/or other operations described elsewhere herein as being performed by the base station 110.

Devices of wireless network 100 may communicate using the electromagnetic spectrum, which may be subdivided based on frequency or wavelength into various classes, bands, channels, or the like. For example, devices of wireless network 100 may communicate using an operating band having a first frequency range (FR1), which may span from 410 MHz to 7.125 GHz, and/or may communicate using an operating band having a second frequency range (FR2), which may span from 24.25 GHz to 52.6 GHz. The frequencies between FR1 and FR2 are sometimes referred to as mid-band frequencies. Although a portion of FR1 is greater than 6 GHz, FR1 is often referred to as a "sub-6 GHz" band. Similarly, FR2 is often referred to as a "millimeter wave" band despite being different from the extremely high frequency (EHF) band (30 GHz - 300 GHz) which is identified by the International Telecommunications Union (ITU) as a "millimeter wave" band. Thus, unless specifically stated otherwise, it should be understood that the term "sub-6 GHz" or the like, if used herein, may broadly represent frequencies less than 6 GHz, frequencies within FR1, and/or mid-band frequencies (e.g., greater than 7.125 GHz). Similarly, unless specifically stated otherwise, it should be understood that the term "millimeter wave" or the like, if used herein, may broadly represent frequencies within the EHF band, frequencies within FR2, and/or mid-band frequencies (e.g., less than 24.25 GHz). It is contemplated that the frequencies included in FR1 and FR2 may be modified, and techniques described herein are applicable to those modified frequency ranges.

As indicated above, Fig. 1 is provided as an example. Other examples may differ from what is described with regard to Fig. 1.

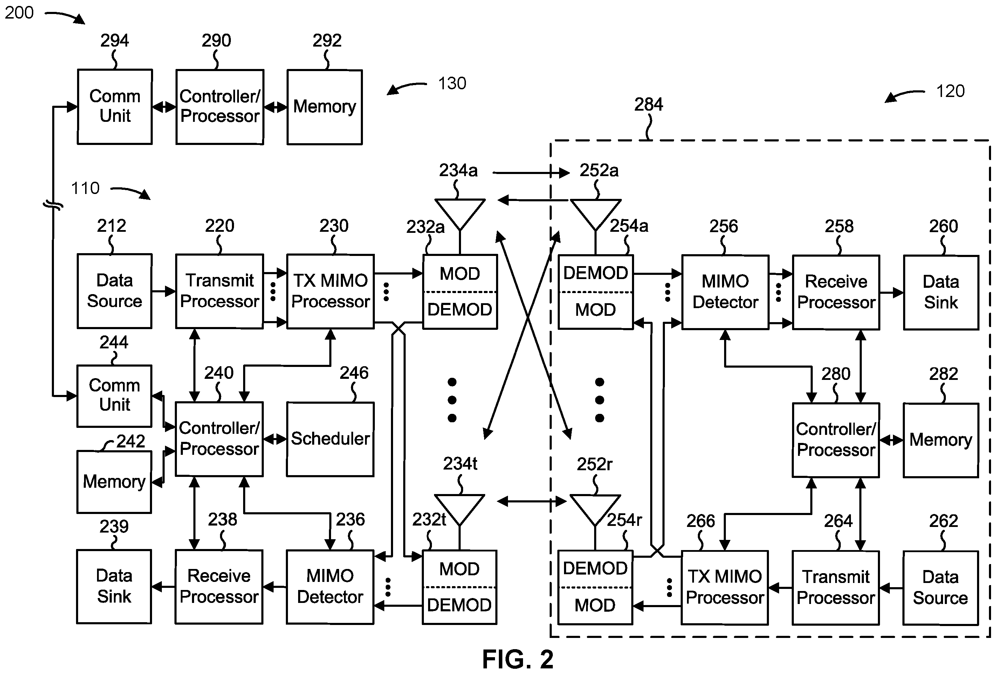

Fig. 2 is a diagram illustrating an example 200 of a base station 110 in communication with a UE 120 in a wireless network 100, in accordance with the present disclosure. Base station 110 may be equipped with T antennas 234a through 234t, and UE 120 may be equipped with R antennas 252a through 252r, where in general T ≥ 1 and R ≥ 1.

At base station 110, a transmit processor 220 may receive data from a data source 212 for one or more UEs, select one or more modulation and coding schemes (MCS) for each UE based at least in part on CQIs received from the UE, process (e.g., encode and modulate) the data for each UE based at least in part on the MCS(s) selected for the UE, and provide data symbols for all UEs. Transmit processor 220 may also process system information (e.g., for semi-static resource partitioning information (SRPI)) and control information (e.g., CQI requests, grants, and/or upper layer signaling) and provide overhead symbols and control symbols. Transmit processor 220 may also generate reference symbols for reference signals (e.g., a cell-specific reference signal (CRS) or a demodulation reference signal (DMRS)) and synchronization signals (e.g., a primary synchronization signal (PSS) or a secondary synchronization signal (SSS)). A transmit (TX) multiple-input multiple-output (MIMO) processor 230 may perform spatial processing (e.g., precoding) on the data symbols, the control symbols, the overhead symbols, and/or the reference symbols, if applicable, and may provide T output symbol streams to T modulators (MODs) 232a through 232t. Each modulator 232 may process a respective output symbol stream (e.g., for OFDM) to obtain an output sample stream. Each modulator 232 may further process (e.g., convert to analog, amplify, filter, and upconvert) the output sample stream to obtain a downlink signal. T downlink signals from modulators 232a through 232t may be transmitted via T antennas 234a through 234t, respectively.

At UE 120, antennas 252a through 252r may receive the downlink signals from base station 110 and/or other base stations and may provide received signals to demodulators (DEMODs) 254a through 254r, respectively. Each demodulator 254 may condition (e.g., filter, amplify, downconvert, and digitize) a received signal to obtain input samples. Each demodulator 254 may further process the input samples (e.g., for OFDM) to obtain received symbols. A MIMO detector 256 may obtain received symbols from all R demodulators 254a through 254r, perform MIMO detection on the received symbols if applicable, and provide detected symbols. A receive processor 258 may process (e.g., demodulate and decode) the detected symbols, provide decoded data for UE 120 to a data sink 260, and provide decoded control information and system information to a controller/processor 280. The term "controller/processor" may refer to one or more controllers, one or more processors, or a combination thereof. A channel processor may determine a reference signal received power (RSRP) parameter, a received signal strength indicator (RSSI) parameter, a reference signal received quality (RSRQ) parameter, and/or a CQI parameter, among other examples. In some aspects, one or more components of UE 120 may be included in a housing 284.

Network controller 130 may include communication unit 294, controller/processor 290, and memory 292. Network controller 130 may include, for example, one or more devices in a core network. Network controller 130 may communicate with base station 110 via communication unit 294.

Antennas (e.g., antennas 234a through 234t and/or antennas 252a through 252r) may include, or may be included within, one or more antenna panels, antenna groups, sets of antenna elements, and/or antenna arrays, among other examples. An antenna panel, an antenna group, a set of antenna elements, and/or an antenna array may include one or more antenna elements. An antenna panel, an antenna group, a set of antenna elements, and/or an antenna array may include a set of coplanar antenna elements and/or a set of non-coplanar antenna elements. An antenna panel, an antenna group, a set of antenna elements, and/or an antenna array may include antenna elements within a single housing and/or antenna elements within multiple housings. An antenna panel, an antenna group, a set of antenna elements, and/or an antenna array may include one or more antenna elements coupled to one or more transmission and/or reception components, such as one or more components of Fig. 2.

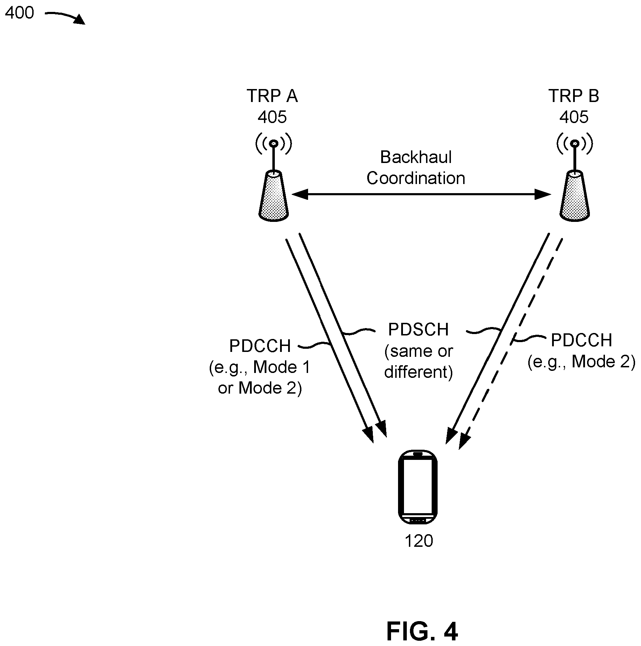

On the uplink, at UE 120, a transmit processor 264 may receive and process data from a data source 262 and control information (e.g., for reports that include RSRP, RSSI, RSRQ, and/or CQI) from controller/processor 280. Transmit processor 264 may also generate reference symbols for one or more reference signals. The symbols from transmit processor 264 may be precoded by a TX MIMO processor 266 if applicable, further processed by modulators 254a through 254r (e.g., for DFT-s-OFDM or CP-OFDM) and transmitted to base station 110. In some aspects, a modulator and a demodulator (e.g., MOD/DEMOD 254) of the UE 120 may be included in a modem of the UE 120. In some aspects, the UE 120 includes a transceiver. The transceiver may include any combination of antenna(s) 252, modulators and/or demodulators 254, MIMO detector 256, receive processor 258, transmit processor 264, and/or TX MIMO processor 266. The transceiver may be used by a processor (e.g., controller/processor 280) and memory 282 to perform aspects of any of the methods described herein, for example, as described with reference to Figs. 4-5.

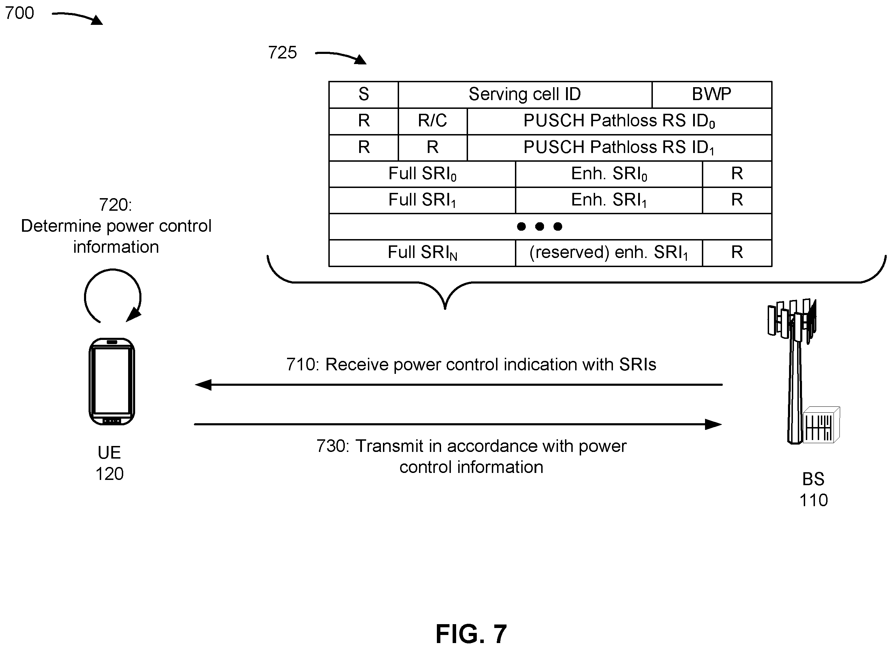

At base station 110, the uplink signals from UE 120 and other UEs may be received by antennas 234, processed by demodulators 232, detected by a MIMO detector 236 if applicable, and further processed by a receive processor 238 to obtain decoded data and control information sent by UE 120. Receive processor 238 may provide the decoded data to a data sink 239 and the decoded control information to controller/processor 240. Base station 110 may include communication unit 244 and communicate to network controller 130 via communication unit 244. Base station 110 may include a scheduler 246 to schedule UEs 120 for downlink and/or uplink communications. In some aspects, a modulator and a demodulator (e.g., MOD/DEMOD 232) of the base station 110 may be included in a modem of the base station 110. In some aspects, the base station 110 includes a transceiver. The transceiver may include any combination of antenna(s) 234, modulators and/or demodulators 232, MIMO detector 236, receive processor 238, transmit processor 220, and/or TX MIMO processor 230. The transceiver may be used by a processor (e.g., controller/processor 240) and memory 242 to perform aspects of any of the methods described herein, for example, as described with reference to Figs. 7-8.

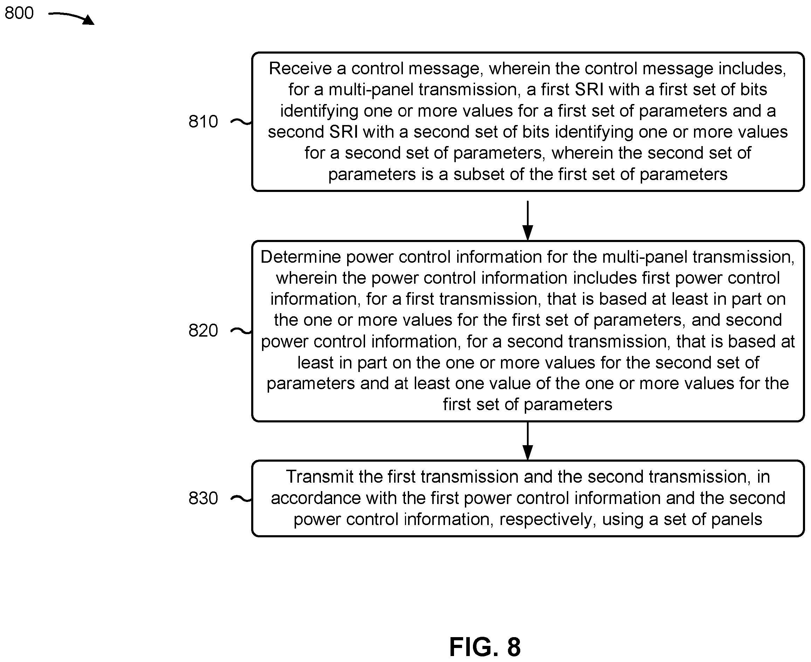

Controller/processor 240 of base station 110, controller/processor 280 of UE 120, and/or any other component(s) of Fig. 2 may perform one or more techniques associated with power control indication using sounding reference signal (SRS) resource indicators (SRIs), as described in more detail elsewhere herein. For example, controller/processor 240 of base station 110, controller/processor 280 of UE 120, and/or any other component(s) of Fig. 2 may perform or direct operations of, for example, process 800 of Fig. 8. Memories 242 and 282 may store data and program codes for base station 110 and UE 120, respectively. In some aspects, memory 242 and/or memory 282 may include a non-transitory computer-readable medium storing one or more instructions (e.g., code and/or program code) for wireless communication. For example, the one or more instructions, when executed (e.g., directly, or after compiling, converting, and/or interpreting) by one or more processors of the base station 110 and/or the UE 120, may cause the one or more processors, the UE 120, and/or the base station 110 to perform or direct operations of, for example, process 800 of Fig. 8 and/or other processes as described herein. In some aspects, executing instructions may include running the instructions, converting the instructions, compiling the instructions, and/or interpreting the instructions, among other examples.

In some aspects, a UE includes means for receiving a control message, wherein the control message includes, for a multi-panel transmission, a first SRI with a first set of bits identifying one or more values for a first set of parameters and a second SRI with a second set of bits identifying one or more values for a second set of parameters, wherein the second set of parameters is a subset of the first set of parameters; means for determining power control information for the multi-panel transmission, wherein the power control information includes first power control information, for a first transmission, that is based at least in part on the one or more values for the first set of parameters, and second power control information, for a second transmission, that is based at least in part on the one or more values for the second set of parameters and at least one value of the one or more values for the first set of parameters; or means for transmitting the first transmission and the second transmission, in accordance with the first power control information and the second power control information, respectively, using a set of panels. The means for the UE to perform operations described herein may include, for example, one or more of antenna 252, demodulator 254, MIMO detector 256, receive processor 258, transmit processor 264, TX MIMO processor 266, modulator 254, controller/processor 280, or memory 282.

In some aspects, the UE includes means for determining a rank for the second power control information based at least in part on a value of a rank indicator of the first set of parameters.

In some aspects, the UE includes means for determining the second power control information based at least in part on a value of an order parameter of the second set of parameters.

In some aspects, the UE includes means for determining the second power control information based at least in part on a first value of a rank parameter of the second power control information and a second value of an order parameter of the second set of parameters.

In some aspects, the UE includes means for determining a configuration for at least one path loss reference signal based at least in part on at least one parameter of the first set of parameters or the second set of parameters.

While blocks in Fig. 2 are illustrated as distinct components, the functions described above with respect to the blocks may be implemented in a single hardware, software, or combination component or in various combinations of components. For example, the functions described with respect to the transmit processor 264, the receive processor 258, and/or the TX MIMO processor 266 may be performed by or under the control of controller/processor 280.

As indicated above, Fig. 2 is provided as an example. Other examples may differ from what is described with regard to Fig. 2.

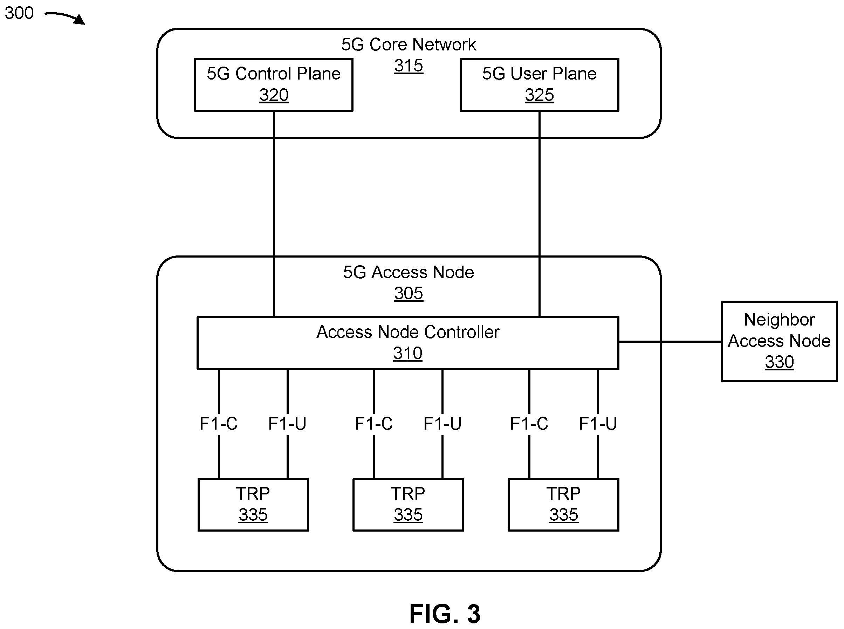

Fig. 3 illustrates an example logical architecture of a distributed RAN 300, in accordance with the present disclosure.

A 5G access node 305 may include an access node controller 310. The access node controller 310 may be a central unit (CU) of the distributed RAN 300. In some aspects, a backhaul interface to a 5G core network 315 may terminate at the access node controller 310. The 5G core network 315 may include a 5G control plane component 320 and a 5G user plane component 325 (e.g., a 5G gateway), and the backhaul interface for one or both of the 5G control plane and the 5G user plane may terminate at the access node controller 310. Additionally, or alternatively, a backhaul interface to one or more neighbor access nodes 330 (e.g., another 5G access node 305 and/or an LTE access node) may terminate at the access node controller 310.

The access node controller 310 may include and/or may communicate with one or more TRPs 335 (e.g., via an F1 Control (F1-C) interface and/or an F1 User (F1-U) interface). A TRP 335 may be a distributed unit (DU) of the distributed RAN 300. In some aspects, a TRP 335 may correspond to a base station 110 described above in connection with Fig. 1. For example, different TRPs 335 may be included in different base stations 110. Additionally, or alternatively, multiple TRPs 335 may be included in a single base station 110. In some aspects, a base station 110 may include a CU (e.g., access node controller 310) and/or one or more DUs (e.g., one or more TRPs 335). In some cases, a TRP 335 may be referred to as a cell, a panel, an antenna array, or an array.

A TRP 335 may be connected to a single access node controller 310 or to multiple access node controllers 310. In some aspects, a dynamic configuration of split logical functions may be present within the architecture of distributed RAN 300. For example, a packet data convergence protocol (PDCP) layer, a radio link control (RLC) layer, and/or a medium access control (MAC) layer may be configured to terminate at the access node controller 310 or at a TRP 335.

In some aspects, multiple TRPs 335 may transmit communications (e.g., the same communication or different communications) in the same transmission time interval (TTI) (e.g., a slot, a mini-slot, a subframe, or a symbol) or different TTIs using different quasi-co-location (QCL) relationships (e.g., different spatial parameters, different transmission configuration indicator (TCI) states, different precoding parameters, and/or different beamforming parameters). In some aspects, a TCI state may be used to indicate one or more QCL relationships. A TRP 335 may be configured to individually (e.g., using dynamic selection) or jointly (e.g., using joint transmission with one or more other TRPs 335) serve traffic to a UE 120.

As indicated above, Fig. 3 is provided as an example. Other examples may differ from what was described with regard to Fig. 3.

Fig. 4 is a diagram illustrating an example 400 of multi-TRP communication (sometimes referred to as multi-panel communication), in accordance with the present disclosure. As shown in Fig. 4, multiple TRPs 405 may communicate with the same UE 120. A TRP 405 may correspond to a TRP 335 described above in connection with Fig. 3.

The multiple TRPs 405 (shown as TRP A and TRP B) may communicate with the same UE 120 in a coordinated manner (e.g., using coordinated multipoint transmissions) to improve reliability and/or increase throughput. The TRPs 405 may coordinate such communications via an interface between the TRPs 405 (e.g., a backhaul interface and/or an access node controller 310). The interface may have a smaller delay and/or higher capacity when the TRPs 405 are co-located at the same base station 110 (e.g., when the TRPs 405 are different antenna arrays or panels of the same base station 110), and may have a larger delay and/or lower capacity (as compared to co-location) when the TRPs 405 are located at different base stations 110. The different TRPs 405 may communicate with the UE 120 using different QCL relationships (e.g., different TCI states), different DMRS ports, and/or different layers (e.g., of a multilayer communication).

In a first multi-TRP transmission mode (e.g., Mode 1), a single physical downlink control channel (PDCCH) may be used to schedule downlink data communications for a single physical downlink shared channel (PDSCH). In this case, multiple TRPs 405 (e.g., TRP A and TRP B) may transmit communications to the UE 120 on the same PDSCH. For example, a communication may be transmitted using a single codeword with different spatial layers for different TRPs 405 (e.g., where one codeword maps to a first set of layers transmitted by a first TRP 405 and maps to a second set of layers transmitted by a second TRP 405). As another example, a communication may be transmitted using multiple codewords, where different codewords are transmitted by different TRPs 405 (e.g., using different sets of layers). In either case, different TRPs 405 may use different QCL relationships (e.g., different TCI states) for different DMRS ports corresponding to different layers. For example, a first TRP 405 may use a first QCL relationship or a first TCI state for a first set of DMRS ports corresponding to a first set of layers, and a second TRP 405 may use a second (different) QCL relationship or a second (different) TCI state for a second (different) set of DMRS ports corresponding to a second (different) set of layers. In some aspects, a TCI state in downlink control information (DCI) (e.g., transmitted on the PDCCH, such as DCI format 1_0 or DCI format 1_1) may indicate the first QCL relationship (e.g., by indicating a first TCI state) and the second QCL relationship (e.g., by indicating a second TCI state). The first and the second TCI states may be indicated using a TCI field in the DCI. In general, the TCI field can indicate a single TCI state (for single-TRP transmission) or multiple TCI states (for multi-TRP transmission as discussed here) in this multi-TRP transmission mode (e.g., Mode 1).

In a second multi-TRP transmission mode (e.g., Mode 2), multiple PDCCHs may be used to schedule downlink data communications for multiple corresponding PDSCHs (e.g., one PDCCH for each PDSCH). In this case, a first PDCCH may schedule a first codeword to be transmitted by a first TRP 405, and a second PDCCH may schedule a second codeword to be transmitted by a second TRP 405. Furthermore, first DCI (e.g., transmitted by the first TRP 405) may schedule a first PDSCH communication associated with a first set of DMRS ports with a first QCL relationship (e.g., indicated by a first TCI state) for the first TRP 405, and second DCI (e.g., transmitted by the second TRP 405) may schedule a second PDSCH communication associated with a second set of DMRS ports with a second QCL relationship (e.g., indicated by a second TCI state) for the second TRP 405. In this case, DCI (e.g., having DCI format 1_0 or DCI format 1_1) may indicate a corresponding TCI state for a TRP 405 corresponding to the DCI. The TCI field of a DCI indicates the corresponding TCI state (e.g., the TCI field of the first DCI indicates the first TCI state and the TCI field of the second DCI indicates the second TCI state).

As indicated above, Fig. 4 is provided as an example. Other examples may differ from what is described with respect to Fig. 4.

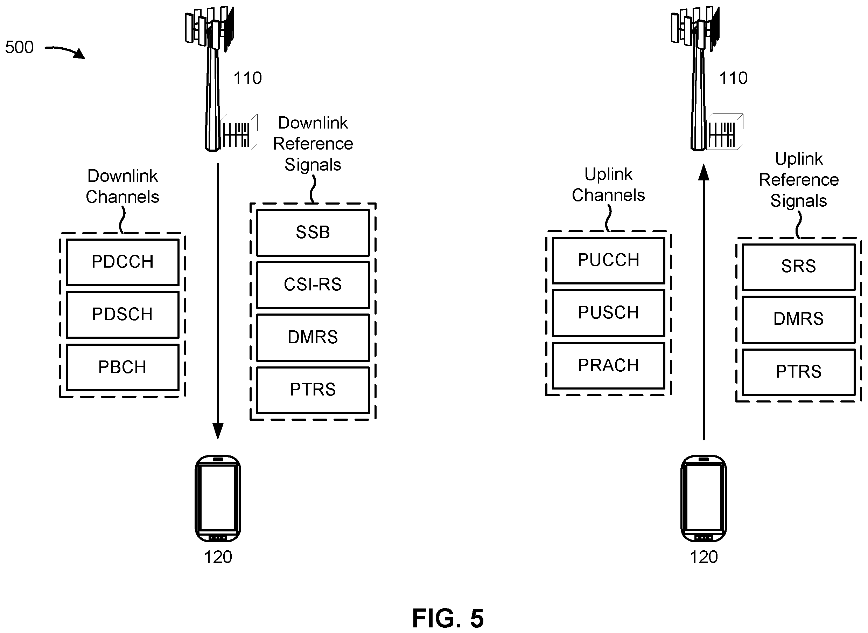

Fig. 5 is a diagram illustrating an example 500 of physical channels and reference signals in a wireless network, in accordance with the present disclosure. As shown in Fig. 5, downlink channels and downlink reference signals may carry information from a base station 110 to a UE 120, and uplink channels and uplink reference signals may carry information from a UE 120 to a base station 110.

As shown, a downlink channel may include a PDCCH that carries DCI, a PDSCH that carries downlink data, or a physical broadcast channel (PBCH) that carries system information, among other examples. In some aspects, PDSCH communications may be scheduled by PDCCH communications. As further shown, an uplink channel may include a physical uplink control channel (PUCCH) that carries uplink control information (UCI), a physical uplink shared channel (PUSCH) that carries uplink data, or a physical random access channel (PRACH) used for initial network access, among other examples. In some aspects, the UE 120 may transmit acknowledgement (ACK) or negative acknowledgement (NACK) feedback (e.g., ACK/NACK feedback or ACK/NACK information) in UCI on the PUCCH and/or the PUSCH.

As further shown, a downlink reference signal may include a synchronization signal block (SSB), a channel state information (CSI) reference signal (CSI-RS), a DMRS, a positioning reference signal (PRS), or a phase tracking reference signal (PTRS), among other examples. As also shown, an uplink reference signal may include an SRS, a DMRS, or a PTRS, among other examples.

An SSB may carry information used for initial network acquisition and synchronization, such as a PSS, an SSS, a PBCH, and a PBCH DMRS. An SSB is sometimes referred to as a synchronization signal/PBCH (SS/PBCH) block. In some aspects, the base station 110 may transmit multiple SSBs on multiple corresponding beams, and the SSBs may be used for beam selection.

A CSI-RS may carry information used for downlink channel estimation (e.g., downlink CSI acquisition), which may be used for scheduling, link adaptation, or beam management, among other examples. The base station 110 may configure a set of CSI-RSs for the UE 120, and the UE 120 may measure the configured set of CSI-RSs. Based at least in part on the measurements, the UE 120 may perform channel estimation and may report channel estimation parameters to the base station 110 (e.g., in a CSI report), such as a channel quality indicator (CQI), a precoding matrix indicator (PMI), a CSI-RS resource indicator (CRI), a layer indicator (LI), a rank indicator (RI), or an RSRP, among other examples. The base station 110 may use the CSI report to select transmission parameters for downlink communications to the UE 120, such as a number of transmission layers (e.g., a rank), a precoding matrix (e.g., a precoder), an MCS, or a refined downlink beam (e.g., using a beam refinement procedure or a beam management procedure), among other examples.

A DMRS may carry information used to estimate a radio channel for demodulation of an associated physical channel (e.g., PDCCH, PDSCH, PBCH, PUCCH, or PUSCH). The design and mapping of a DMRS may be specific to a physical channel for which the DMRS is used for estimation. DMRSs are UE-specific, can be beamformed, can be confined in a scheduled resource (e.g., rather than transmitted on a wideband), and can be transmitted only when necessary. As shown, DMRSs are used for both downlink communications and uplink communications.

A PTRS may carry information used to compensate for oscillator phase noise. Typically, the phase noise increases as the oscillator carrier frequency increases. Thus, PTRS can be utilized at high carrier frequencies, such as millimeter wave frequencies, to mitigate phase noise. The PTRS may be used to track the phase of the local oscillator and to enable suppression of phase noise and common phase error (CPE). As shown, PTRSs are used for both downlink communications (e.g., on the PDSCH) and uplink communications (e.g., on the PUSCH).

A PRS may carry information used to enable timing or ranging measurements of the UE 120 based on signals transmitted by the base station 110 to improve observed time difference of arrival (OTDOA) positioning performance. For example, a PRS may be a pseudo-random Quadrature Phase Shift Keying (QPSK) sequence mapped in diagonal patterns with shifts in frequency and time to avoid collision with cell-specific reference signals and control channels (e.g., a PDCCH). In general, a PRS may be designed to improve detectability by the UE 120, which may need to detect downlink signals from multiple neighboring base stations in order to perform OTDOA-based positioning. Accordingly, the UE 120 may receive a PRS from multiple cells (e.g., a reference cell and one or more neighbor cells), and may report a reference signal time difference (RSTD) based on OTDOA measurements associated with the PRSs received from the multiple cells. In some aspects, the base station 110 may then calculate a position of the UE 120 based on the RSTD measurements reported by the UE 120.

An SRS may carry information used for uplink channel estimation, which may be used for scheduling, link adaptation, precoder selection, or beam management, among other examples. The base station 110 may configure one or more SRS resource sets for the UE 120, and the UE 120 may transmit SRSs on the configured SRS resource sets. An SRS resource set may have a configured usage, such as uplink CSI acquisition, downlink CSI acquisition for reciprocity-based operations, uplink beam management, among other examples. The base station 110 may measure the SRSs, may perform channel estimation based at least in part on the measurements, and may use the SRS measurements to configure communications with the UE 120.

As indicated above, Fig. 5 is provided as an example. Other examples may differ from what is described with regard to Fig. 5.

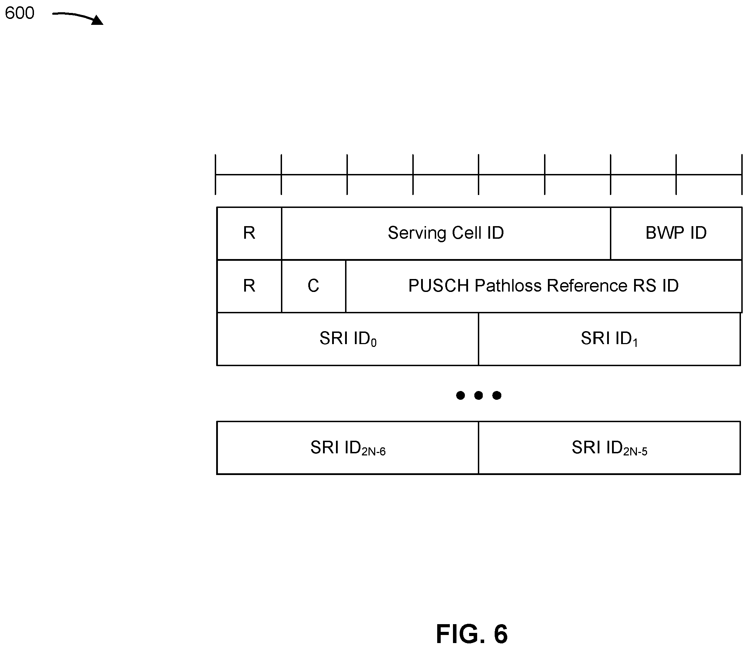

Fig. 6 is a diagram illustrating an example 600 of a MAC control element (MAC CE) for conveying an SRI, in accordance with the present disclosure.

For single-DCI based m-TRP PUSCH repetition, a BS may transmit a single DCI (e.g., DCI format 0_1 or DCI format 0_2) scheduling a multi-panel PUSCH transmission with two PUSCH transmissions and may indicate two power control parameter sets (e.g., using an *SRI-PUSCH-PowerControl* field). Each power control parameter set can be applied to a corresponding PUSCH transmission in a multi-panel PUSCH transmission associated with SRS resources of a corresponding one or more SRS resource sets indicated in the single DCI. For non-codebook based PUSCH, the single DCI may have two SRI fields (or a joint field mapped with two SRIs), and each SRI field, such as each SRI field defined in 3GPP Technical Specification (TS) 38.212, Table 7.3.1.1.2-28, 7.3.1.1.2-29, 7.3.1.1.2-30, or 7.3.1.1.2-31, among other examples, indicates an SRI on a per-TRP basis. A first SRI field in the single DCI scheduling a multi-panel PUSCH transmission, may be a "full size" SRI that includes bits to indicate a set of precoders associated with a first set of the SRS resources and a rank for transmitting a first PUSCH transmission in the multi-panel PUSCH transmission. To save overhead in DCI, the second PUSCH transmission may have the same rank as the first PUSCH transmission. Each codepoint of the SRI field in DCI may have an association with a set of power control parameters configured by a MAC-CE. As shown in Fig. 6, a MAC CE may include a set of SRI fields for SRI indication and activate a path loss reference signal to be associated with one or more SRI codepoints. For example, when a BS is to convey one or more SRIs to a UE, the BS may transmit a MAC CE with a set of fields reserved for the one or more SRIs.

The MAC CE may include, in a first octet, a field for identifying a serving cell to which the SRIs included in the MAC CE are to be applied and a field for identifying a bandwidth part to which the SRIs included in the MAC CE are to be applied, among other examples. The MAC CE may include, in a second octet, a PUSCH pathloss reference reference signal (RS) (PLRS) identifier. The PUSCH PLRS identifier may indicate a PUSCH PLRS to which the SRIs are to be applied. The MAC CE may include, in one or more further octets 3 through N (N ≥ 1), a set of SRI identifiers (SRI ID₀ through SRI ID_{2N-5}). Each SRI ID may include information identifying an SRI for an SRS resource set.

A first SRI field, in an octet of the MAC CE, may be a "full size" SRI that indicates a set of precoders associated with a first set of the SRS resources and a rank for transmitting a first PUSCH transmission in a multi-panel PUSCH transmission using a first PLRS associated with the first SRI. To reduce overhead, an enhanced second SRI field may be introduced, for the second SRI field in the octet of the MAC CE. The second SRI field, when used for an enhanced second SRI (rather than a full second SRI), may indicate a set of precoders, but lacks a rank indicator (which is included in the first SRI), thereby enabling the second SRI field to include fewer bits than the first SRI field, which may reduce signaling overhead. Alternatively, some codepoints of the second SRI field may be used for some other indication, such as a dynamic panel switching indication. In this way, the second SRI field, when used with an enhanced second SRI, enables additional signaling functionality without increasing signaling overhead.

As indicated above, Fig. 6 is provided as an example. Other examples may differ from what is described with respect to Fig. 6.

As described above, when using an enhanced second SRI, a BS may forgo including some information in a second SRI field to enable reduced signaling overhead of use of some bits for other signaling functionalities. However, for multi-panel transmission scenarios, use of the enhanced second SRI, may result in a lack of some information that a UE is to use to determine power control for multi-panel transmission. For example, the first SRI field may include power control information to enable a UE to determine power control parameters, but the second SRI field may lack an open loop power parameter (P₀), a closed loop power parameter (e.g., a closed loop index), a PLRS power parameter, or a path loss compensation factor (alpha) parameter, among other examples.

Some aspects described herein enable power control indication for an enhanced second SRI. For example, a UE may use information in the first SRI to determine first power control information and uses information in the enhanced second SRI and a rank indicator of a first SRI to determine second power control information. In this case, the UE may determine, for example, a value for a P₀ parameter, a closed loop index parameter, a PLRS parameter, or an alpha parameter based on the enhanced second SRI and the rank indicator of the first SRI, thereby enabling power control for multi-panel transmission. Additionally, or alternatively, the UE may receive radio resource control (RRC) signaling, separate from a MAC CE conveying the enhanced second SRI, that includes information to use with the enhanced second SRI to determine the second power control information. In this case, the UE may map a parameter in the RRC signaling (e.g., *maxNrofSRI-PUSCH-Mappings* of *SRI-PUSCH-PowerControl*) to an order indicator for use in deriving a full second SRI from the enhanced second SRI and to determine the second power control information from the derived full second SRI. In this way, the UE enables use of enhanced second SRIs in multi-panel transmission scenarios, thereby enabling reduction in signaling overhead and/or enhancement of signaling functionality in multi-panel transmission scenarios.

Fig. 7 is a diagram illustrating an example 700 associated with power control indication using SRIs, in accordance with the present disclosure. As shown in Fig. 7, example 700 includes communication between a BS 110 and a UE 120. In some aspects, BS 110 and UE 120 may be included in a wireless network, such as wireless network 100. BS 110 and UE 120 may communicate via a wireless access link, which may include an uplink and a downlink.

As further shown in Fig. 7, and by reference number 710, UE 120 may receive, from BS 110, a power control indication with a set of fields conveying a set of SRIs. For example, UE 120 may receive a power control indication including a MAC CE with a full first SRI and an enhanced second SRI. Additionally, or alternatively, UE 120 may receive a power control indication including a MAC CE with a full first SRI and a plurality of enhanced second SRIs. Additionally, or alternatively, UE 120 may receive a power control indication with a MAC CE with a set of full first SRIs and a set of corresponding enhanced second SRIs.

As further shown in Fig. 7, and by reference number 720, UE 120 may determine power control information. For example, UE 120 may determine first power control information based at least in part on a full first SRI of the power control indication and may determine second power control information based at least in part on a parameter of the full first SRI and based at least in part on the enhanced second SRI. In this case, UE 120 may determine a P₀ parameter, a closed loop index parameter, a PLRS parameter, or an alpha parameter, among other examples, based at least in part on the second power control indication and, for example, a rank indicator of the full first SRI. Additionally, or alternatively, UE 120 may derive a full second SRI from the enhanced second SRI and, for example, the rank indicator of the full first SRI. In this case, UE 120 may determine the second power control information based at least in part on the derived full second SRI.

Additionally, or alternatively, UE 120 may determine the second power control information based at least in part on a parameter conveyed via RRC signaling. For example, UE 120 may receive RRC signaling from BS 110 and may use a parameter in the RRC signaling to derive a full second SRI from an enhanced second SRI. In this case, UE 120 may use the derived full second SRI to determine the second power control information.

In some aspects, UE 120 may determine a status of a set of PLRSs based at least in part on the set of SRIs in the received power control indication. For example, as shown by reference number 725, one or more bits of a second SRI field, which conveys an enhanced second SRI, may be an indicator for whether to activate one or more (e.g., one or two) PLRSs. In this case, UE 120 may determine whether to switch between using two PLRSs for multi-panel transmission and using a single PLRS for single-panel transmission based at least in part on a value for the one or more bits of the second SRI field. Additionally, or alternatively, UE 120 may determine which pair of PLRSs to use in connection with a pair of SRIs based at least in part on the one or more bits in an octet conveying the pair of SRIs (e.g., a full first SRI and an enhanced second SRI).

As further shown in Fig. 7, and by reference number 730, UE 120 may transmit a set of communications in accordance with power control information. For example, UE 120 may transmit a first communication using a first panel configured in accordance with first power control parameters and a second communication using a second panel configured in accordance with second power control parameters. Additionally, or alternatively, UE 120 may transmit a set of first communications using a set of first panels configured in accordance with a set of first power control parameters and transmit a set of second communications using a set of second panels configured in accordance with a set of second power control parameters.

As indicated above, Fig. 7 is provided as an example. Other examples may differ from what is described with respect to Fig. 7.

Fig. 8 is a diagram illustrating an example process 800 performed, for example, by a UE, in accordance with the present disclosure. Example process 800 is an example where the UE (e.g., UE 120) performs operations associated with power control indication using SRIs.

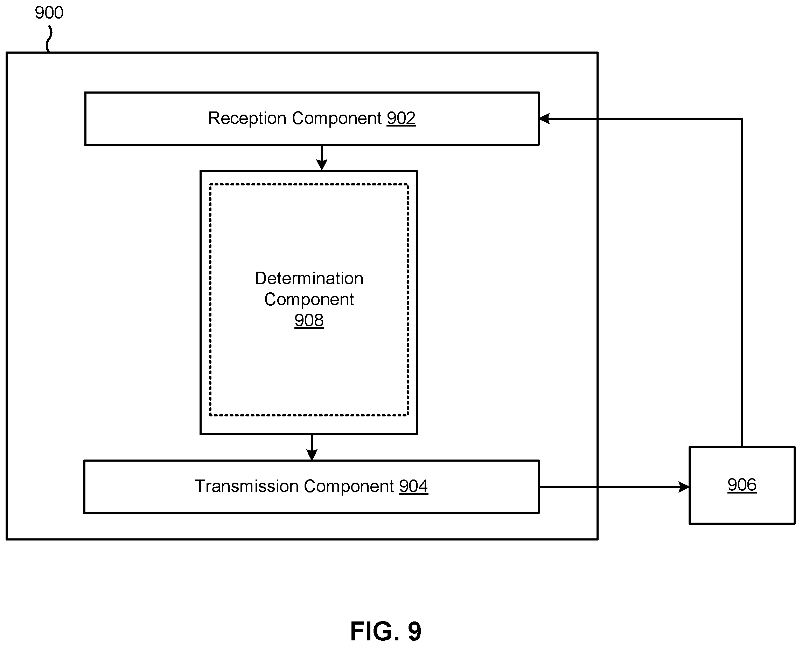

As shown in Fig. 8, in some aspects, process 800 may include receiving a control message, wherein the control message includes, for a multi-panel transmission, a first SRI with a first set of bits identifying one or more values for a first set of parameters and a second SRI with a second set of bits identifying one or more values for a second set of parameters, wherein the second set of parameters is a subset of the first set of parameters (block 810). For example, the UE (e.g., using reception component 902, depicted in Fig. 9) may receive a control message, wherein the control message includes, for a multi-panel transmission, a first SRI with a first set of bits identifying one or more values for a first set of parameters and a second SRI with a second set of bits identifying one or more values for a second set of parameters, wherein the second set of parameters is a subset of the first set of parameters, as described above.

As further shown in Fig. 8, in some aspects, process 800 may include determining power control information for the multi-panel transmission, wherein the power control information includes first power control information, for a first transmission, that is based at least in part on the one or more values for the first set of parameters, and second power control information, for a second transmission, that is based at least in part on the one or more values for the second set of parameters and at least one value of the one or more values for the first set of parameters (block 820). For example, the UE (e.g., using determination component 908, depicted in Fig. 9) may determine power control information for the multi-panel transmission, wherein the power control information includes first power control information, for a first transmission, that is based at least in part on the one or more values for the first set of parameters, and second power control information, for a second transmission, that is based at least in part on the one or more values for the second set of parameters and at least one value of the one or more values for the first set of parameters, as described above.

As further shown in Fig. 8, in some aspects, process 800 may include transmitting the first transmission and the second transmission, in accordance with the first power control information and the second power control information, respectively, using a set of panels (block 830). For example, the UE (e.g., using transmission component 904, depicted in Fig. 9) may transmit the first transmission and the second transmission, in accordance with the first power control information and the second power control information, respectively, using a set of panels, as described above.

Process 800 may include additional aspects, such as any single aspect or any combination of aspects described below and/or in connection with one or more other processes described elsewhere herein.

In a first aspect, the control message is DCI.

In a second aspect, alone or in combination with the first aspect, determining the power control information comprises determining a rank for the second power control information based at least in part on a value of a rank indicator of the first set of parameters.

In a third aspect, alone or in combination with one or more of the first and second aspects, the second power control information includes at least one of an open loop power parameter, a closed loop power parameter, a path loss reference signal power parameter, or a path loss compensation factor parameter.

In a fourth aspect, alone or in combination with one or more of the first through third aspects, the control message is a radio resource control message.

In a fifth aspect, alone or in combination with one or more of the first through fourth aspects, determining the power control information comprises determining the second power control information based at least in part on a value of an order parameter of the second set of parameters.

In a sixth aspect, alone or in combination with one or more of the first through fifth aspects, determining the power control information comprises determining the second power control information based at least in part on a first value of a rank parameter of the second power control information and a second value of an order parameter of the second set of parameters.

In a seventh aspect, alone or in combination with one or more of the first through sixth aspects, the control message is a medium access control (MAC) control element.

In an eighth aspect, alone or in combination with one or more of the first through seventh aspects, determining the power control information comprises determining a configuration for at least one path loss reference signal based at least in part on at least one parameter of the first set of parameters or the second set of parameters.

In a ninth aspect, alone or in combination with one or more of the first through eighth aspects, the configuration of the at least one path loss reference signal includes at least one of a configuration for a pair of path loss reference signals, a configuration for a single path loss reference signal, or a configuration for the multi-panel transmission.

Although Fig. 8 shows example blocks of process 800, in some aspects, process 800 may include additional blocks, fewer blocks, different blocks, or differently arranged blocks than those depicted in Fig. 8. Additionally, or alternatively, two or more of the blocks of process 800 may be performed in parallel.

Fig. 9 is a block diagram of an example apparatus 900 for wireless communication. The apparatus 900 may be a UE, or a UE may include the apparatus 900. In some aspects, the apparatus 900 includes a reception component 902 and a transmission component 904, which may be in communication with one another (for example, via one or more buses and/or one or more other components). As shown, the apparatus 900 may communicate with another apparatus 906 (such as a UE, a base station, or another wireless communication device) using the reception component 902 and the transmission component 904. As further shown, the apparatus 900 may include one or more of a determination component 908, among other examples.

In some aspects, the apparatus 900 may be configured to perform one or more operations described herein in connection with Fig. 7. Additionally, or alternatively, the apparatus 900 may be configured to perform one or more processes described herein, such as process 800 of Fig. 8. In some aspects, the apparatus 900 and/or one or more components shown in Fig. 9 may include one or more components of the UE described above in connection with Fig. 2. Additionally, or alternatively, one or more components shown in Fig. 9 may be implemented within one or more components described above in connection with Fig. 2. Additionally, or alternatively, one or more components of the set of components may be implemented at least in part as software stored in a memory. For example, a component (or a portion of a component) may be implemented as instructions or code stored in a non-transitory computer-readable medium and executable by a controller or a processor to perform the functions or operations of the component.

The reception component 902 may receive communications, such as reference signals, control information, data communications, or a combination thereof, from the apparatus 906. The reception component 902 may provide received communications to one or more other components of the apparatus 900. In some aspects, the reception component 902 may perform signal processing on the received communications (such as filtering, amplification, demodulation, analog-to-digital conversion, demultiplexing, deinterleaving, de-mapping, equalization, interference cancellation, or decoding, among other examples), and may provide the processed signals to the one or more other components of the apparatus 906. In some aspects, the reception component 902 may include one or more antennas, a demodulator, a MIMO detector, a receive processor, a controller/processor, a memory, or a combination thereof, of the UE described above in connection with Fig. 2.

The transmission component 904 may transmit communications, such as reference signals, control information, data communications, or a combination thereof, to the apparatus 906. In some aspects, one or more other components of the apparatus 906 may generate communications and may provide the generated communications to the transmission component 904 for transmission to the apparatus 906. In some aspects, the transmission component 904 may perform signal processing on the generated communications (such as filtering, amplification, modulation, digital-to-analog conversion, multiplexing, interleaving, mapping, or encoding, among other examples), and may transmit the processed signals to the apparatus 906. In some aspects, the transmission component 904 may include one or more antennas, a modulator, a transmit MIMO processor, a transmit processor, a controller/processor, a memory, or a combination thereof, of the UE described above in connection with Fig. 2. In some aspects, the transmission component 904 may be co-located with the reception component 902 in a transceiver.

The reception component 902 may receive a control message, wherein the control message includes, for a multi-panel transmission, a first SRI with a first set of bits identifying one or more values for a first set of parameters and a second SRI with a second set of bits identifying one or more values for a second set of parameters, wherein the second set of parameters is a subset of the first set of parameters. The determination component 908 may determine power control information for the multi-panel transmission, wherein the power control information includes first power control information, for a first transmission, that is based at least in part on the one or more values for the first set of parameters, and second power control information, for a second transmission, that is based at least in part on the one or more values for the second set of parameters and at least one value of the one or more values for the first set of parameters. The transmission component 904 may transmit the first transmission and the second transmission, in accordance with the first power control information and the second power control information, respectively, using a set of panels.

The number and arrangement of components shown in Fig. 9 are provided as an example. In practice, there may be additional components, fewer components, different components, or differently arranged components than those shown in Fig. 9. Furthermore, two or more components shown in Fig. 9 may be implemented within a single component, or a single component shown in Fig. 9 may be implemented as multiple, distributed components. Additionally, or alternatively, a set of (one or more) components shown in Fig. 9 may perform one or more functions described as being performed by another set of components shown in Fig. 6.

The foregoing disclosure provides illustration and description, but is not intended to be exhaustive or to limit the aspects to the precise forms disclosed. Modifications and variations may be made in light of the above disclosure or may be acquired from practice of the aspects.

As used herein, the term "component" is intended to be broadly construed as hardware and/or a combination of hardware and software. "Software" shall be construed broadly to mean instructions, instruction sets, code, code segments, program code, programs, subprograms, software modules, applications, software applications, software packages, routines, subroutines, objects, executables, threads of execution, procedures, and/or functions, among other examples, whether referred to as software, firmware, middleware, microcode, hardware description language, or otherwise. As used herein, a processor is implemented in hardware and/or a combination of hardware and software. It will be apparent that systems and/or methods described herein may be implemented in different forms of hardware and/or a combination of hardware and software. The actual specialized control hardware or software code used to implement these systems and/or methods is not limiting of the aspects. Thus, the operation and behavior of the systems and/or methods were described herein without reference to specific software code-it being understood that software and hardware can be designed to implement the systems and/or methods based, at least in part, on the description herein.

As used herein, satisfying a threshold may, depending on the context, refer to a value being greater than the threshold, greater than or equal to the threshold, less than the threshold, less than or equal to the threshold, equal to the threshold, not equal to the threshold, or the like.

Even though particular combinations of features are recited in the claims and/or disclosed in the specification, these combinations are not intended to limit the disclosure of various aspects. In fact, many of these features may be combined in ways not specifically recited in the claims and/or disclosed in the specification. Although each dependent claim listed below may directly depend on only one claim, the disclosure of various aspects includes each dependent claim in combination with every other claim in the claim set. As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

No element, act, or instruction used herein should be construed as critical or essential unless explicitly described as such. Also, as used herein, the articles "a" and "an" are intended to include one or more items and may be used interchangeably with "one or more." Further, as used herein, the article "the" is intended to include one or more items referenced in connection with the article "the" and may be used interchangeably with "the one or more." Furthermore, as used herein, the terms "set" and "group" are intended to include one or more items (e.g., related items, unrelated items, or a combination of related and unrelated items), and may be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of").

## Claims

1. A user equipment, UE, (120) for wireless communication, comprising:
a memory; and
one or more processors, coupled to the memory, configured to:
receive a control message, wherein the control message includes, for a multi-panel transmission, a first sounding reference signal, SRS, resource indicator, SRI, with a first set of bits identifying one or more values for a first set of parameters and a second SRI with a second set of bits identifying one or more values for a second set of parameters, wherein the second set of parameters is a subset of the first set of parameters, wherein the first set of parameters comprises a rank indicator, and wherein the second set of parameters lacks the rank indicator;
determine power control information for the multi-panel transmission, wherein the power control information includes first power control information, for a first transmission, that is based at least in part on the one or more values for the first set of parameters, and second power control information, for a second transmission, that is based at least in part on the one or more values for the second set of parameters and a rank for the second power control information determined based at least in part on a value of the rank indicator of the first set of parameters; and
transmit the first transmission and the second transmission, in accordance with the first power control information and the second power control information, respectively, using a set of panels.

2. The UE of claim 1, wherein the control message is a downlink control information, DCI.

3. The UE of any one of claims 1 to 2, wherein the second power control information includes at least one of an open loop power parameter, a closed loop power parameter, a path loss reference signal power parameter, or a path loss compensation factor parameter.

4. The UE of claim 1, wherein the control message is a radio resource control message.

5. The UE of any one of claim 1, wherein the control message is a medium access control, MAC, control element.

6. The UE of any one of claims 1 to 5, wherein the one or more processors, to determine the power control information, are configured to:
determine a configuration for at least one path loss reference signal based at least in part on at least one parameter of the first set of parameters or the second set of parameters.

7. The UE of claim 6, wherein the configuration of the at least one path loss reference signal includes at least one of:
a configuration for a pair of path loss reference signals,
a configuration for a single path loss reference signal, or
a configuration for the multi-panel transmission.

8. A method (800) of wireless communication performed by a user equipment, UE, comprising:
receiving (810) a control message, wherein the control message includes, for a multi-panel transmission, a first sounding reference signal, SRS, resource indicator, SRI, with a first set of bits identifying one or more values for a first set of parameters and a second SRI with a second set of bits identifying one or more values for a second set of parameters, wherein the second set of parameters is a subset of the first set of parameters, wherein the first set of parameters comprises a rank indicator, and wherein the second set of parameters lacks the rank indicator;
determining (820) power control information for the multi-panel transmission,
wherein the power control information includes first power control information, for a first transmission, that is based at least in part on the one or more values for the first set of parameters, and second power control information, for a second transmission, that is based at least in part on the one or more values for the second set of parameters and a rank for the second power control information determined based at least in part on a value of the rank indicator of the first set of parameters; and
transmitting (830) the first transmission and the second transmission, in accordance with the first power control information and the second power control information, respectively, using a set of panels.

9. A non-transitory computer-readable medium storing a set of instructions for wireless communication, the set of instructions comprising:
one or more instructions that, when executed by one or more processors of a user equipment, UE, cause the UE to:
receive a control message, wherein the control message includes, for a multi-panel transmission, a first sounding reference signal, SRS, resource indicator, SRI, with a first set of bits identifying one or more values for a first set of parameters and a second SRI with a second set of bits identifying one or more values for a second set of parameters, wherein the second set of parameters is a subset of the first set of parameters, wherein the first set of parameters comprises a rank indicator, and wherein the second set of parameters lacks the rank indicator;
determine power control information for the multi-panel transmission, wherein the power control information includes first power control information, for a first transmission, that is based at least in part on the one or more values for the first set of parameters, and second power control information, for a second transmission, that is based at least in part on the one or more values for the second set of parameters and a rank for the second power control information determined based at least in part on a value of the rank indicator of the first set of parameters; and
transmit the first transmission and the second transmission, in accordance with the first power control information and the second power control information, respectively, using a set of panels.

## Patentansprüche

1. Ein Benutzergerät (User Equipment bzw. UE) (120) für eine drahtlose Kommunikation, aufweisend:
einen Speicher, und
einen oder mehrere Prozessoren, die mit dem Speicher gekoppelt sind und konfiguriert sind zum:
Empfangen einer Steuernachricht, wobei die Steuernachricht, für eine Multi-Panel-Sendung, einen ersten Sondierungsreferenzsignal (SRS)-Ressourcenindikator (SRI) mit einem ersten Satz von Bits, die einen oder mehrere Werte für einen ersten Satz von Parametern identifizieren, und einen zweiten SRI mit einem zweiten Satz von Bits, die einen oder mehrere Werte für einen zweiten Satz von Parametern identifizieren, enthält, wobei der zweite Satz von Parametern ein Teilsatz des ersten Satzes von Parametern ist, wobei der erste Satz von Parametern einen Rangindikator aufweist, und wobei der zweite Satz von Parametern keinen Rangindikator aufweist,
Bestimmen von Leistungssteuerinformationen für die Multi-Panel-Sendung, wobei die Leistungssteuerinformationen erste Leistungssteuerinformationen für eine erste Sendung, die wenigstens teilweise auf dem einen oder den mehreren Werten für den ersten Satz von Parametern basieren, und zweite Leistungssteuerinformationen für eine zweite Sendung, die wenigstens teilweise auf dem einen oder den mehreren Werten für den zweiten Satz von Parametern und auf einem Rang für die zweiten Leistungssteuerinformationen, der basierend wenigstens teilweise auf einem Wert des Rangindikators des ersten Satzes von Parametern bestimmt wird, basieren, und
Senden der ersten Sendung und der zweiten Sendung jeweils gemäß den ersten Leistungssteuerinformationen und den zweiten Leistungssteuerinformationen unter Verwendung eines Satzes von Panels.

2. UE nach Anspruch 1, wobei die Steuernachricht Abwärtsstrecke-Steuerinformationen (Downlink Control Information) ist.

3. UE nach Anspruch 1 oder 2, wobei die zweiten Leistungssteuerinformationen einen Offener-Regelkreis-Leistungsparameter, einen Geschlossener-Regelkreis-Leistungsparameter, einen Pfadverlust-Referenzsignal-Leistungsparameter und/oder einen Pfadverlust-Kompensationsfaktor-Parameter enthalten.

4. UE nach Anspruch 1, wobei die Steuernachricht eine Funkressourcensteuerung-Nachricht ist.

5. UE nach Anspruch 1, wobei die Steuernachricht ein MAC (Medium Access Control)-Steuerelement ist.

6. UE nach einem der Ansprüche 1 bis 5, wobei der eine oder die mehreren Prozessoren für das Bestimmen der Leistungssteuerinformationen konfiguriert sind zum:
Bestimmen einer Konfiguration für wenigstens ein Pfadverlust-Referenzsignal basierend wenigstens teilweise auf einem Parameter aus dem ersten Satz von Parametern oder dem zweiten Satz von Parametern.

7. UE nach Anspruch 6, wobei die Konfiguration des wenigstens einen Pfadverlust-Referenzsignals wenigstens eines der Folgenden aufweist:
eine Konfiguration für ein Paar von Pfadverlust-Referenzsignalen,
eine Konfiguration für ein einzelnes Pfadverlust-Referenzsignal, oder
eine Konfiguration für die Multi-Panel-Sendung.

8. Ein Verfahren (800) für eine drahtlose Kommunikation, das durch ein Benutzergerät (User Equipment bzw. UE) durchgeführt wird, aufweisend:
Empfangen (810) einer Steuernachricht, wobei die Steuernachricht, für eine Multi-Panel-Sendung, einen ersten Sondierungsreferenzsignal (SRS)-Ressourcenindikator (SRI) mit einem ersten Satz von Bits, die einen oder mehrere Werte für einen ersten Satz von Parametern identifizieren, und einen zweiten SRI mit einem zweiten Satz von Bits, die einen oder mehrere Werte für einen zweiten Satz von Parametern identifizieren, enthält, wobei der zweite Satz von Parametern ein Teilsatz des ersten Satzes von Parametern ist, wobei der erste Satz von Parametern einen Rangindikator aufweist, und wobei der zweite Satz von Parametern keinen Rangindikator aufweist,
Bestimmen (820) von Leistungssteuerinformationen für die Multi-Panel-Sendung, wobei die Leistungssteuerinformationen erste Leistungssteuerinformationen für eine erste Sendung, die wenigstens teilweise auf dem einen oder den mehreren Werten für den ersten Satz von Parametern basieren, und zweite Leistungssteuerinformationen für eine zweite Sendung, die wenigstens teilweise auf dem einen oder den mehreren Werten für den zweiten Satz von Parametern und auf einem Rang für die zweiten Leistungssteuerinformationen, der basierend wenigstens teilweise auf einem Wert des Rangindikators des ersten Satzes von Parametern bestimmt wird, basieren, und
Senden (830) der ersten Sendung und der zweiten Sendung jeweils gemäß den ersten Leistungssteuerinformationen und den zweiten Leistungssteuerinformationen unter Verwendung eines Satzes von Panels.

9. Ein nicht-transitorisches, computerlesbares Medium, das einen Satz von Befehlen für eine drahtlose Kommunikation speichert, wobei der Satz von Befehlen aufweist:
einen oder mehrere Befehle, die bei einer Ausführung durch einen oder mehrere Prozessoren eines Benutzergeräts (User Equipment bzw. UE) das UE veranlassen zum:
Empfangen einer Steuernachricht, wobei die Steuernachricht, für eine Multi-Panel-Sendung, einen ersten Sondierungsreferenzsignal (SRS)-Ressourcenindikator (SRI) mit einem ersten Satz von Bits, die einen oder mehrere Werte für einen ersten Satz von Parametern identifizieren, und einen zweiten SRI mit einem zweiten Satz von Bits, die einen oder mehrere Werte für einen zweiten Satz von Parametern identifizieren, enthält, wobei der zweite Satz von Parametern ein Teilsatz des ersten Satzes von Parametern ist, wobei der erste Satz von Parametern einen Rangindikator aufweist, und wobei der zweite Satz von Parametern keinen Rangindikator aufweist,
Bestimmen von Leistungssteuerinformationen für die Multi-Panel-Sendung, wobei die Leistungssteuerinformationen erste Leistungssteuerinformationen für eine erste Sendung, die wenigstens teilweise auf dem einen oder den mehreren Werten für den ersten Satz von Parametern basieren, und zweite Leistungssteuerinformationen für eine zweite Sendung, die wenigstens teilweise auf dem einen oder den mehreren Werten für den zweiten Satz von Parametern und auf einem Rang für die zweiten Leistungssteuerinformationen, der basierend wenigstens teilweise auf einem Wert des Rangindikators des ersten Satzes von Parametern bestimmt wird, basieren, und
Senden der ersten Sendung und der zweiten Sendung jeweils gemäß den ersten Leistungssteuerinformationen und den zweiten Leistungssteuerinformationen unter Verwendung eines Satzes von Panels.

## Revendications

1. Un équipement utilisateur, UE, (120) pour la communication sans fil, comprenant :
une mémoire ; et
un ou plusieurs processeurs, couplés à la mémoire, configurés pour :
recevoir un message de commande, dans lequel le message de commande comprend, pour une transmission à partir de panneaux multiples, un premier indicateur de ressource, SRI, de signal de référence de sondage, SRS, avec un premier ensemble de bits identifiant une ou plusieurs valeurs pour un premier ensemble de paramètres et un deuxième SRI avec un deuxième ensemble de bits identifiant une ou plusieurs valeurs pour un deuxième ensemble de paramètres, dans lequel le deuxième ensemble de paramètres est un sous-ensemble du premier ensemble de paramètres, dans lequel le premier ensemble de paramètres comprend un indicateur de rang, et dans lequel le deuxième ensemble de paramètres est dépourvu de l'indicateur de rang ;
déterminer des informations de commande de puissance pour la transmission à partir de panneaux multiples, dans lequel les informations de commande de puissance comprennent des premières informations de commande de puissance, pour une première transmission, qui sont basées au moins en partie sur l'une ou plusieurs valeurs pour le premier ensemble de paramètres, et des deuxièmes informations de commande de puissance, pour une deuxième transmission, qui sont basées au moins en partie sur l'une ou plusieurs valeurs pour le deuxième ensemble de paramètres et un rang pour les deuxièmes informations de commande de puissance déterminées en fonction au moins en partie d'une valeur de l'indicateur de rang du premier ensemble de paramètres ; et
transmettre la première transmission et la deuxième transmission, conformément aux premières informations de commande de puissance et aux deuxièmes informations de commande de puissance, respectivement, en utilisant un ensemble de panneaux.

2. L'UE de la revendication 1, dans lequel le message de commande est une information de commande de liaison descendante, DCI.

3. L'UE selon l'une quelconque des revendications 1 à 2, dans lequel la deuxième information de commande de puissance comprend au moins l'un parmi un paramètre de puissance en boucle ouverte, un paramètre de puissance en boucle fermée, un paramètre de puissance de signal de référence d'affaiblissement de trajet, ou un paramètre de facteur de compensation d'affaiblissement de trajet.

4. L'UE de la revendication 1, dans lequel le message de commande est un message de commande de ressource radio.

5. L'UE de la revendication 1,
dans lequel le message de commande est un élément de commande de contrôle d'accès au support, MAC.

6. L'UE de l'une quelconque des revendications 1 à 5, dans lequel le ou les processeurs, pour déterminer les informations de commande de puissance, sont configurés pour :
déterminer une configuration pour au moins un signal de référence d'affaiblissement de trajet basé au moins en partie sur au moins un paramètre du premier ensemble de paramètres ou du deuxième ensemble de paramètres.

7. L'UE de la revendication 6, dans lequel la configuration de l'au moins un signal de référence d'affaiblissement de trajet comprend au moins l'un des éléments suivants :
une configuration pour une paire de signaux de référence d'affaiblissement de trajet,
une configuration pour un seul signal de référence d'affaiblissement de trajet, ou
une configuration pour la transmission à partir de panneaux multiples.

8. Un procédé (800) de communication sans fil effectué par un équipement utilisateur, UE, comprenant les étapes consistant à :
recevoir (810) un message de commande, dans lequel le message de commande comprend, pour une transmission à partir de panneaux multiples, un premier indicateur de ressource, SRI, de signal de référence de sondage, SRS, avec un premier ensemble de bits identifiant une ou plusieurs valeurs pour un premier ensemble de paramètres et un deuxième SRI avec un deuxième ensemble de bits identifiant une ou plusieurs valeurs pour un deuxième ensemble de paramètres, dans lequel le deuxième ensemble de paramètres est un sous-ensemble du premier ensemble de paramètres, dans lequel le premier ensemble de paramètres comprend un indicateur de rang, et dans lequel le deuxième ensemble de paramètres n'a pas l'indicateur de rang ;
déterminer (820) des informations de commande de puissance pour la transmission à partir de panneaux multiples, dans lequel les informations de commande de puissance comprennent des premières informations de commande de puissance, pour une première transmission, qui sont basées au moins en partie sur une ou plusieurs valeurs pour le premier ensemble de paramètres, et des deuxièmes informations de commande de puissance, pour une deuxième transmission, qui sont basées au moins en partie sur une ou plusieurs valeurs pour le deuxième ensemble de paramètres et un rang pour les deuxièmes informations de commande de puissance déterminées en fonction au moins en partie d'une valeur de l'indicateur de rang du premier ensemble de paramètres ; et
transmettre (830) la première transmission et la deuxième transmission, conformément aux premières informations de commande de puissance et aux deuxièmes informations de commande de puissance, respectivement, en utilisant un ensemble de panneaux.

9. Un support non transitoire lisible par ordinateur stockant un ensemble d'instructions pour la communication sans fil, l'ensemble d'instructions comprenant :
une ou plusieurs instructions qui, lorsqu'elles sont exécutées par un ou plusieurs processeurs d'un équipement utilisateur, UE, amènent l'UE à :
recevoir un message de commande, dans lequel le message de commande comprend, pour une transmission à partir de panneaux multiples, un premier indicateur de ressource, SRI, de signal de référence de sondage, SRS, avec un premier ensemble de bits identifiant une ou plusieurs valeurs pour un premier ensemble de paramètres et un deuxième SRI avec un deuxième ensemble de bits identifiant une ou plusieurs valeurs pour un deuxième ensemble de paramètres, dans lequel le deuxième ensemble de paramètres est un sous-ensemble du premier ensemble de paramètres, dans lequel le premier ensemble de paramètres comprend un indicateur de rang, et dans lequel le deuxième ensemble de paramètres n'a pas l'indicateur de rang ; déterminer des informations de commande de puissance pour la transmission à partir de panneaux multiples, dans lequel les informations de commande de puissance comprennent des premières informations de commande de puissance, pour une première transmission, qui sont basées au moins en partie sur une ou plusieurs valeurs pour le premier ensemble de paramètres, et des deuxièmes informations de commande de puissance, pour une deuxième transmission, qui sont basées au moins en partie sur une ou plusieurs valeurs pour le deuxième ensemble de paramètres et un rang pour les deuxièmes informations de commande de puissance déterminées en fonction au moins en partie d'une valeur de l'indicateur de rang du premier ensemble de paramètres ; et
transmettre la première transmission et la deuxième transmission, conformément aux premières informations de commande de puissance et aux deuxièmes informations de commande de puissance, respectivement, à l'aide d'un ensemble de panneaux.
